# EUROPÄISCHE PATENTSCHRIFT

(11) **EP 4 089 013 B1**
(45) Veröffentlichungstag und Bekanntmachung des Hinweises auf die Patenterteilung: **20.08.2025**
(21) Anmeldenummer: 22172729.0
(22) Anmeldetag: 11.05.2022
(51) Int. Cl.: B64D 9/00, E05B 47/02, E05C 9/02

(54) **RIEGELSYSTEM, FRACHTDECK UND FLUGZEUG**
LOCKING SYSTEM, CARGO DECK AND AIRCRAFT
SYSTÈME DE VERROUILLAGE, PONT DE CHARGEMENT ET AVION

(30) Priorität: 11.05.2021 DE 102021112241
(43) Veröffentlichungstag der Anmeldung: 16.11.2022
(73) Patentinhaber: Telair International GmbH, 83714 Miesbach (DE)
(72) Erfinder: Mengual Hinojosa, Marcos, 83714 Miesbach (DE)
(74) Vertreter: Meissner Bolte Partnerschaft mbB

(56) Entgegenhaltungen:
- US-A- 3 693 919
- US-A1- 2013 334 367

## Beschreibung

Die Erfindung betrifft ein Riegelsystem zum Befestigen einer Transporteinheit für Frachtstücke, ein Frachtdeck mit einem solchen Riegelsystem und ein Flugzeug.

Bei dem Transport von Ladung in Flugzeugen werden häufig Frachtstücke, z. B. Container oder Paletten ("unit load devices - ULDs") verwendet, die quaderförmig oder trapezförmig sind oder eine Form mit einer speziellen Außenkontur aufweisen. Derartige Container oder Paletten können abhängig vom Laderaum des Flugzeugs längsgeladen oder quergeladen werden. Für den Transport besonders schwerer Ladung können Spezialpaletten, sogenannte "Schwerlastpaletten" zum Einsatz kommen. Diese Spezialpaletten weisen standardisierte Abmessungen von 243,8 cm x 497,8 cm (96 Zoll x 196 Zoll) beziehungsweise von 243,8 cm x 605,8 cm (96 Zoll x 238,5 Zoll) auf. Derartige Paletten können Lasten mit einem Gewicht von bis zu 13608 kg aufnehmen.

Es ist allgemein bekannt, dass die vorgenannten Spezialpaletten an deren Rändern eine Vielzahl von Taschen bzw. Aussparungen aufweisen, um das Eingreifen von Seitenriegeln zur Sicherung der Paletten zu ermöglichen. Um derart große Paletten im Frachtraum zu sichern, sind herkömmlicherweise Riegel vorgesehen, die in X-Richtung des Flugzeugs (Längsrichtung) vorne und hinten an den Paletten hochgeklappt werden. Durch diese Riegel werden die Paletten in X-Richtung sowie in Z-Richtung (Vertikalrichtung) des Flugzeugs fixiert.

Zur Realisierung einer erforderlichen Redundanz zur Sicherung der Paletten in X- und Z-Richtung kommen bekanntlich Seitenriegel ("Side Locks") zum Einsatz, die im Frachtraum entlang der Flugzeuginnenseiten in Längsrichtung angeordnet sind. Die Seitenriegel dienen zum seitlichen Fixieren der Paletten, indem die Seitenriegel in die Taschen bzw. Aussparungen der Paletten eingreifen. Häufig sind sogenannte Mittelriegel in der Mitte des Frachtraums angeordnet, um die Paletten zusätzlich in Y-Richtung, die quer zur X-Richtung verläuft, und in Z-Richtung des Flugzeugs zu fixieren.

Aus dem Stand der Technik sind Riegelsysteme bekannt, bei denen die Seitenriegel manuell, d.h. per Hand betätigt werden. Zur Betätigung muss das Bedienpersonal an den jeweiligen Seitenriegel an dessen Einbauposition herantreten. Dies kann nur erfolgen, wenn zwischen dem Frachtstück, d.h. der geladenen Palette mit aufgenommener Fracht, und der Flugzeuginnenhaut des Frachtraums ausreichend Platz für das Bedienpersonal zur Verfügung steht. Beispielsweise ist dies bei Großraumflugzeugen der Fall. Bei diesen Flugzeugtypen ist eine doppelreihige Beladung des Frachtraums mit den vorgenannten Spezialpaletten in Kombination mit den bekannten Seitenriegeln möglich.

Aus der US 3 693 919 A ist beispielsweise ein Seitenriegel zum Befestigen von Frachtstücken in einem Flugzeug bekannt. Der Seitenriegel weist eine Riegelzunge sowie eine Betätigungseinrichtung mit einem Hebel und einem Schwenk- und Federmechanismus auf. Zur Ver- und Entriegelung wird der Seitenriegel manuell betätigt.

Die US 2013/0334367 A1 beschreibt einen Flugzeugfrachtraum mit mehreren in Serie angeordneten Seitenriegeln, die mittels einer Welle gemeinsam betätigt, d.h. von einer Lösestellung in eine Fixierstellung und umgekehrt bewegt werden. An einem axialen Ende der Welle ist ein Hebel zur Fernbetätigung angeordnet.

Bei Flugzeugen mit kleineren Frachträumen ist zurzeit eine solche doppelreihige Beladung nicht möglich, da zwischen der Flugzeuginnenhaut des Frachtraums und den Paletten nicht ausreichend Platz für den Zugang des Bedienpersonals zur Verfügung steht. Deswegen werden derartige Frachträume vorwiegend einreihig beladen.

Der Erfindung liegt daher die Aufgabe zu Grunde, ein Riegelsystem anzugeben, das eine verbesserte Ausnutzung eines Flugzeugfrachtdecks ermöglicht sowie die Sicherung von Frachtstücken im Flugzeugfrachtdeck vereinfacht. Ferner liegt der Erfindung die Aufgabe zu Grunde, ein Frachtdeck mit einem solchen Riegelsystem und ein Flugzeug anzugeben.

Erfindungsgemäß wird diese Aufgabe im Hinblick auf das Riegelsystem durch den Gegenstand des Anspruchs 1 gelöst. Hinsichtlich des Frachtdecks und des Flugzeugs wird die vorstehend genannte Aufgabe jeweils durch den Gegenstand des Anspruchs 12 (Frachtdeck) und des Anspruchs 13 (Flugzeug) gelöst.

Konkret wird die Aufgabe durch ein Riegelsystem zum Befestigen wenigstens einer Transporteinheit für Frachtstücke, insbesondere einer Frachtpalette, in einem Flugzeug, gelöst. Das Riegelsystem umfasst mehrere Riegeleinrichtungen mit jeweils wenigstens einem Riegelelement zum Befestigen und Lösen der wenigstens einen Transporteinheit an wenigstens einer vorbestimmten Position. Das Riegelelement ist in einer Verschieberichtung zwischen einer Fixierstellung und einer Lösestellung verschiebbar. Das Riegelsystem weist ferner wenigstens eine Betätigungseinrichtung zum Fernbetätigen der Riegeleinrichtungen auf.

Die Betätigungseinrichtung umfasst wenigstens eine Stelleinheit zum Einleiten einer Stellbewegung und wenigstens eine Schiebeeinheit zum Verschieben des Riegelelements. Die Stelleinheit zum Übertragen der Stellbewegung ist durch wenigstens einen quer zur Verschieberichtung erstreckenden Übertragungsabschnitt der Betätigungseinrichtung mit der Schiebeeinheit verbunden. Die Schiebeeinheit nimmt die vom Übertragungsabschnitt aufgenommene und/oder übersetzte Stellbewegung der Stelleinheit auf und leitet diese an das Riegelelement weiter, wobei die Stelleinheit von den Riegeleinrichtungen quer zur Verschieberichtung versetzt angeordnet ist und die Riegeleinrichtungen über die Stelleinheit und den Übertragungsabschnitt fernbetätigbar sind.

Die Schiebeeinheit ist mit dem Riegelelement der jeweiligen Riegeleinrichtung mechanisch gekoppelt, um die Stellbewegung zu übertragen und das Riegelelement in Verschieberichtung zwischen der Fixier- und Lösestellung zu bewegen. Das Riegelelement weist einen Formschlussbereich auf, der durch eine Verzahnung gebildet ist und die Schiebeeinheit umfasst ein, insbesondere zweites, Rotationselement, das mit dem Riegelelement zum Überführen in die Fixierstellung und/oder in die Lösestellung in Zahneingriff steht.

Ein wesentlicher Gedanke der vorliegenden Erfindung besteht darin, dass wenigstens eine der Riegeleinrichtungen durch die Stelleinheit fernbetätigbar ist. Vorzugsweise sind durch die Stelleinheit mehrere der Riegeleinrichtungen, insbesondere zumindest zwei der Riegeleinrichtungen, fernbetätigbar.

Um dies zu ermöglichen, ist der Übertragungsabschnitt vorgesehen, der quer zur Verschieberichtung eine Erstreckung aufweist und die Stelleinheit und die Schiebeeinheit miteinander verbindet. Mit anderen Worten überbrückt der Übertragungsabschnitt eine Strecke, insbesondere eine Distanz, zwischen der Stelleinheit und der Schiebeeinheit. Die Stelleinheit ist somit von der Schiebeeinheit durch den Übertragungsabschnitt quer zur Verschieberichtung beabstandet angeordnet. Die Stelleinheit und die Schiebeeinheit sind vorzugsweise durch zumindest ein Übertragungselement indirekt miteinander verbunden. Hier ist vorteilhaft, dass die Betätigung der wenigstens einen der mehreren Riegeleinrichtungen nicht an dessen Einbau- bzw. Montageposition, sondern von der Riegeleinrichtung quer zur Verschieberichtung des Riegelelements versetzt erfolgt. Es ist somit eine Fernbedienbarkeit der Riegeleinrichtung realisiert.

Bei einer Beladekonfiguration eines Frachtdecks, mit zwei in Flugzeugquerrichtung nebeneinander angeordneten Frachtstück-Transporteinheiten, insbesondere Frachtpaletten, ist somit, im Unterschied zum Stand der Technik, die Zugänglichkeit für Bedienpersonal zu den einzelnen Riegeleinrichtungen nicht zwingend erforderlich, da deren Betätigung über die Stelleinheit quer zur Verschieberichtung des Riegelelements versetzt, insbesondere ortsversetzt, erfolgt. Dies hat den großen Vorteil, dass nicht nur Frachtdecks, insbesondere Hauptdecks, von Großraumflugzeugen doppelreihig beladbar sind, sondern auch Frachtdecks von Flugzeugen mit einem im Vergleich zu Großraumflugzeugen kleineren Frachtdeckquerschnitt. Bevorzugt betrifft dies die doppelreihige Beladung der Frachtdecks mit Schwerlastpaletten, die üblicherweise Grundabmessungen von 243,8 cm x 497,8 cm (96 Zoll x 196 Zoll) beziehungsweise von 243,8 cm x 605,8 cm (96 Zoll x 238,5 Zoll) aufweisen. Solche Schwerlastpalette können Lasten mit einem Gewicht von bis zu 13608 kg tragen.

Das erfindungsgemäße Riegelsystem ermöglicht somit eine verbesserte Ausnutzung des Frachtraums bzw. des Frachtdecks von Flugzeugen unabhängig vom Flugzeugtyp bzw. der Größe des Frachtdecks. Des Weiteren ist durch das erfindungsgemäße Riegelsystem die Betätigung der Riegeleinrichtungen vereinfacht, da mit einer einzelnen Stelleinheit mehrere Riegelelemente in die Fixier- bzw. Lösestellung bringbar sind. Die Transporteinheiten, insbesondere Frachtpaletten, sind daher ohne großen Aufwand an deren Transportposition im Frachtraum fixierbar. Ein separates Betätigen jeder Riegeleinrichtung des Riegelsystems entfällt. Die Beladezeiten von Frachtdecks sind dadurch erheblich reduziert.

Mit dem erfindungsgemäßen Riegelsystem können eine einzelne Transporteinheit, insbesondere eine Frachtpalette, oder mehrere Transporteinheiten, insbesondere mehrere Frachtpaletten, in einem Flugzeugfrachtdeck gleichzeitig fixiert werden.

Bei dem Riegelsystem sind die Riegelelemente der Riegeleinrichtungen jeweils zwischen der Fixierstellung und der Lösestellung verschiebbar. In der Fixierstellung befindet sich das jeweilige Riegelelement im Eingriff mit einer Transporteinheit, die dazu wenigstens einen Formschlussbereich, insbesondere eine Tasche aufweisen kann. Es ist möglich, dass das Riegelsystem zumindest ein Riegelelement aufweist, das in Fixierstellung ins Leere greift, wenn gerade an dieser Stelle keine Transporteinheit angeordnet ist. Dieser Fall kann beispielsweise bei in Flugzeuglängsrichtung hintereinander angeordneten Transporteinheiten auftreten, die voneinander beabstandet sind.

In der Lösestellung steht das jeweilige Riegelelement mit der zugeordneten Transporteinheit nicht in Eingriff, sodass die Transporteinheit, insbesondere seitlich, freigegeben ist. In einer Ausführungsform kann das Riegelelement wenigstens in und/oder an einem Gehäuse in Verschieberichtung translatorisch geführt sein. Bei dieser Ausführung entspricht die Fixierstellung einer aus dem Gehäuse zumindest teilweise ausgefahrenen Stellung des Riegelelements. Die Lösestellung entspricht einer in das Gehäuse zumindest teilweise eingefahrenen Stellung des Riegelelements.

Über die Stelleinheit ist die Stellbewegung zum Fixieren und/oder Lösen der Riegelelemente von wenigstens einer Transporteinheit in den Übertragungsabschnitt einleitbar. Die Stelleinheit kann manuell betätigt, insbesondere per Hand und/oder per Fuß, und/oder elektrisch betätigt, insbesondere per Elektromotor, die Stellbewegung ausführen. Die Stellbewegung kann eine Rotationsbewegung und/oder eine Translationsbewegung sein. Mit anderen Worten kann die Stelleinheit dazu ausgebildet sein, eine Rotationsbewegung und/oder eine Translationsbewegung in den Übertragungsabschnitt einzuleiten. Der Übertragungsabschnitt ist vorzugsweise mit der Stelleinheit derart gekoppelt, dass dieser durch die Stellbewegung in eine Translationsbewegung versetzt wird.

Alternativ kann der Übertragungsabschnitt durch die Stelleinheit in Rotation versetzt werden. Die Schiebeeinheit ist mit dem Übertragungsabschnitt verbunden derart, dass diese die vom Übertragungsabschnitt aufgenommene bzw. übersetzte Stellbewegung der Stelleinheit aufnimmt und an das Riegelelement weiterleitet. Die Schiebeeinheit wird dazu vorzugsweise durch den Übertragungsabschnitt in Rotation versetzt. Das Riegelelement ist mit der Schiebeeinheit mechanisch gekoppelt. Über die mechanische Kopplung kann die Schiebeeinheit eine Stellbewegung in das Riegelelement einleiten, um dieses in die Fixier- oder Lösestellung zu bringen. Die Schiebeeinheit ist bevorzugt an der jeweiligen Riegeleinrichtung angeordnet. Konkret ist die Schiebeeinheit bevorzugt in unmittelbarer Nähe des Riegelelements angeordnet.

Das jeweilige Riegelelement ist vorzugsweise zungenförmig ausgebildet. Das Riegelelement kann monolithisch, insbesondere als Block, ausgebildet sein. In einer Ausführung kann das Riegelelement gabelförmig ausgebildet sein. Andere Ausgestaltungen des Riegelelements sind möglich.

Bei einer bevorzugten Ausführungsform ist die Stelleinheit zum Fernbetätigen von der Riegeleinrichtung quer zur Verschieberichtung des wenigstens einen Riegelelements beabstandet vorgesehen. Mit anderen Worten ist die Stelleinheit von der Riegeleinrichtung quer zur Verschieberichtung des Riegelelements versetzt angeordnet. Oder anders gesagt, weist die Stelleinheit eine Distanz von wenigstens einer der Riegeleinrichtungen quer zur Verschieberichtung auf. Bevorzugt ist die Stelleinheit von mehreren Riegeleinrichtungen quer zur Verschieberichtung beabstandet angeordnet. Dadurch lassen sich eine der Riegeleinrichtungen oder mehrere Riegeleinrichtungen durch die Stelleinheit fernbetätigen. Dies hat den Vorteil, dass die Stelleinheit als zentrales Betätigungsglied für Bedienpersonal zum Betätigen sowie im Servicefall gut zugänglich ist. Dies ist insbesondere vorteilhaft, wenn die Stelleinheit im beladenen Zustand des Frachtdecks zugänglich sein soll.

Bei einer weiteren bevorzugten Ausführungsform umfasst die Stelleinheit wenigstens ein erstes Rotationselement und wenigstens ein Betätigungsmittel, durch das das erste Rotationselement zum Einleiten einer Stellbewegung um seine Rotationsachse drehbar ist. Das erste Rotationselement ist vorzugsweise mit dem Betätigungsmittel verbunden. Das Betätigungsmittel kann mit dem ersten Rotationselement lösbar verbunden sein. Das erste Rotationselement kann durch das Betätigungsmittel um einen bestimmten Drehwinkel um die Rotationsachse gedreht werden. Das erste Rotationselement kann durch das Betätigungsmittel zumindest zwei Drehstellungen um die Rotationsachse einnehmen. Vorzugsweise gibt die Drehstellung des ersten Rotationselements Rückschluss auf die Verschiebestellung der Riegelelemente.

Die Rotationsachse des ersten Rotationselements kann stehend ausgerichtet sein. Das erste Rotationselement kann in Umfangsrichtung zumindest abschnittsweise eine Verzahnung aufweisen, die mit dem Übertragungsabschnitt zum Einleiten einer Stellbewegung in Eingriff steht. Das erste Rotationselement ist vorzugsweise ein erstes Zahnrad.

Es ist alternativ möglich, dass das erste Rotationselement zumindest abschnittsweise ein Außengewinde zur Einleitung der Stellbewegung in den Übertragungsabschnitt aufweist. Das erste Rotationselement kann über das Außengewinde mit dem Übertragungsabschnitt mechanisch gekoppelt sein. Die Rotationsachse des ersten Rotationselements kann liegend ausgerichtet sein. Das erste Rotationselement und der Übertragungsabschnitt können zusammen zumindest abschnittsweise einen Gewindetrieb und/oder einen Schneckentrieb bilden. Bei den vorgenannten Ausführungsformen betreffend das erste Rotationselement ist vorteilhaft, dass die Stellbewegung auf einfache und präzise Weise auf den Übertragungsabschnitt übertragbar ist. Zusätzlich ist dadurch ein konstruktiv einfacher Aufbau des Riegelsystems realisierbar.

Das Betätigungsmittel kann ein Hebel sein. Zusätzlich oder alternativ kann das Betätigungsmittel eine Kurbel umfassen. Das Betätigungsmittel ist vorzugsweise an dem ersten Rotationselement in Einbaulage, insbesondere beim Betätigen, oben angeordnet. Alternativ kann das Betätigungsmittel an dem ersten Rotationselement in Einbaulage, insbesondere beim Betätigen, seitlich angeordnet sein. Das Betätigungsmittel kann abnehmbar vorgesehen sein. Mit anderen Worten kann das Betätigungsmittel mit dem ersten Rotationselement lösbar verbindbar sein. Das Betätigungsmittel kann an dem ersten Rotationselement ausklappbar angeordnet sein. Durch das Betätigungsmittel kann das erste Rotationselement manuell, insbesondere per Hand und/oder per Fuß, um seine Rotationsachse gedreht werden. Dies hat den Vorteil, dass das Bedienpersonal die Riegeleinrichtungen schnell und einfach manuell betätigen und die Transporteinheit bzw. Transporteinheiten fixieren kann. Die Komplexität des Riegelsystems wird dadurch geringgehalten.

Alternativ oder zusätzlich kann das erste Rotationselement durch das Betätigungsmittel um seine Rotationsachse elektrisch gedreht werden. Dazu kann das Betätigungsmittel wenigstens einen elektrischen Stellantrieb, insbesondere einen Elektromotor aufweisen. Dies hat den Vorteil, dass das Bedienpersonal das Riegelsystem und somit die entsprechende(n) Transporteinheit(en) über eine Bedienkonsole elektrisch betätigen und somit eine manuelle Betätigung der Stelleinheit entfallen kann. Dadurch können Be- und Endladezeiten des Frachtdecks maßgeblich verkürzt werden.

Das zweite Rotationselement umfasst eine Rotationsachse. Die Rotationsachse des zweiten Rotationselements kann stehend ausgerichtet sein. Das zweite Rotationselement kann in Umfangsrichtung zumindest abschnittsweise eine Verzahnung aufweisen, die mit dem Übertragungsabschnitt zum Einleiten einer Stellbewegung in Eingriff steht. Das zweite Rotationselement ist vorzugsweise ein zweites Zahnrad.

Es ist alternativ möglich, dass das zweite Rotationselement zumindest abschnittsweise ein Außengewinde zur Aufnahme der Stellbewegung von dem Übertragungsabschnitt aufweist. Das zweite Rotationselement kann über das Außengewinde mit dem Übertragungsabschnitt mechanisch gekoppelt sein. Die Rotationsachse des zweiten Rotationselements kann liegend ausgerichtet sein. Das zweite Rotationselement und der Übertragungsabschnitt können zusammen zumindest abschnittsweise einen Gewindetrieb und/oder einen Schneckentrieb bilden. Über das zweite Rotationselement ist die Stellbewegung auf einfache und präzise Weise von dem Übertragungsabschnitt aufnehmbar. Zusätzlich ist dadurch der konstruktive Aufbau des Riegelsystems weiter vereinfacht.

Das zweite Rotationselement der Schiebeeinheit steht bevorzugt mit dem Formschlussbereich des Riegelelements in direktem Kontakt. Mit anderen Worten wirkt das Riegelelement über den Formschlussbereich mit dem zweiten Rotationselement beim Verschieben vorzugsweise unmittelbar zusammen.

Der Formschlussbereich ist bevorzugt an dem Riegelelement ausgebildet. Der Formschlussbereich ist ein verzahnter Abschnitt an dem Riegelelement, der sich in Verschieberichtung erstrecken kann. Das zweite Rotationselement ist vorzugsweise an die Riegeleinrichtung angrenzend angeordnet. Mit anderen Worten befindet sich das zweite Rotationselement an der Riegeleinrichtung, um das Riegelelement in Verschieberichtung zu bewegen. Hier ist vorteilhaft, dass die Übertragung der Stellbewegung über einen Formschlussbereich, d.h. mechanisch, erfolgt und somit bspw. elektrische Mittel zum Verschieben des Riegelelements entfallen können. Das Riegelsystem umfasst dadurch einen vereinfachten Aufbau.

Das jeweilige Riegelelement kann in Verschieberichtung durch ein Gehäuse geführt sein. Das kann Teil der Riegeleinrichtung, d.h. ein separates Gehäuseteil zum Führen und Lagern des Riegelelements sein. Alternativ ist es möglich, dass das jeweilige Riegelelement in oder an einer Schiene, die insbesondere quer zur Verschieberichtung verläuft, verschiebbar angeordnet ist. Bei der Schiene kann es sich um eine Seitenführungsschiene handeln, die vorzugsweise in Flugzeuglängsrichtung im Frachtdeck angeordnet ist. Zusätzlich oder alternativ sind die beiden Rotationselemente jeweils an deren Positionen vorzugsweise um jeweils eine/die Rotationsachse drehbar gelagert. Dabei können die Rotationselemente an dem Gehäuse für das Riegelelement und/oder an der Schiene drehbar gelagert sein.

Hier ist vorteilhaft, dass für das Riegelelement kein separates Gehäuse erforderlich ist, sondern die Schiene als Mehrfunktionselement zur Führung und Lagerung des Riegelelements genutzt werden kann. Das separate Gehäuse hat demgegenüber den Vorteil, dass die Riegeleinrichtungen bspw. an der Schiene flexibel positionierbar sind. Zusätzlich kann bei Bedarf eine nachträgliche Positionsänderung der Riegelelemente erfolgen.

Bei einer bevorzugten Ausführungsform weist der Übertragungsabschnitt eine längliche Erstreckung auf und umfasst wenigstens einen verzahnten Bereich. Der verzahnte Bereich kann abschnittsweise ausgebildet sein. Der Übertragungsabschnitt kann einen einzigen durchgängig verzahnten Bereich aufweisen. Alternativ kann der Übertragungsabschnitt mehrere verzahnte Bereiche aufweisen. Der verzahnte Bereich steht vorzugsweise mit wenigstens einem der Rotationselemente zum Einleiten und/oder Übertragen der Stellbewegung in Eingriff. Der Übertragungsabschnitt ist vorzugsweise durch eine Zahnstange gebildet. Der Übertragungsabschnitt steht hier über den zumindest einen verzahnten Bereich mit dem ersten und zweiten Rotationselement, insbesondere mit der Verzahnung des ersten und zweiten Rotationselements, in Eingriff.

Dadurch wird bei der Betätigung des ersten Rotationselements dessen Drehbewegung in eine Translationsbewegung des Übertragungsabschnitts umgewandelt und anschließend an der Kontaktstelle zwischen dem Übertragungsabschnitt und dem zweiten Rotationselement die Translationsbewegung in eine Drehbewegung des zweiten Rotationselements umgewandelt. Durch die mechanische Kopplung des zweiten Rotationselements und des Riegelelements wird die Drehbewegung des zweiten Rotationselements in eine Translationsbewegung des Riegelelements in Verschieberichtung umgesetzt. Es liegt hier somit ein mechanisch gekoppeltes System vor, das die Stellbewegung des ersten Rotationselements auf einfache Weise auf das bzw. die Riegelelemente sicher überträgt. Sollte bspw. zumindest eines von mehreren Riegelelementen nicht ordnungsgemäß in an der Transporteinheit vorgesehenen Aussparungen eingreifen können, lässt sich das erste Rotationselement nicht vollständig in eine Endstellung drehen.

Bei einer Ausführungsform weist der Übertragungsabschnitt wenigstens einen Gewindebereich, insbesondere eine Gewindespindel, auf. Der Gewindebereich kann zum Einleiten und/oder Übertragen der Stellbewegung mit wenigstens einem der Rotationselemente in Eingriff stehen. Über den Gewindebereich und das eingreifende Rotationselement kann ein Gewindetrieb gebildet sein. Dies kann für den Eingriff des ersten Rotationselements sowie den Eingriff des zweiten Rotationselements mit dem Gewindebereich zutreffen. Der Übertragungsabschnitt kann mehrere Gewindebereiche oder einen einzigen durchgängigen Gewindebereich aufweisen. Der Übertragungsabschnitt erstreckt sich vorzugsweise zumindest zwischen dem ersten Rotationselement und zumindest einem zweiten Rotationselement. Dabei kann jedem Rotationselement ein separater Gewindebereich zugeordnet sein. Diese Ausführungsform stellt ebenfalls eine einfache (alternative) Möglichkeit dar, die Stellbewegung von der Stelleinheit auf die Riegelelemente zu übertragen.

Bei einer weiteren Ausführungsform umfasst der Übertragungsabschnitt wenigstens einen Schwenkmechanismus, der das erste Rotationselement und das zweite Rotationselement derart gelenkig verbindet, dass bei Rotation des ersten Rotationselements der Schwenkmechanismus eine Schwenkbewegung ausführt und das zweite Rotationselement in Rotation versetzt. Der Schwenkmechanismus ist vorzugsweise durch ein mehrteiliges Schwenkgestänge gebildet. Der Schwenkmechanismus kann liegend angeordnet sein. Das Schwenkgestänge kann zumindest drei Stangenelemente aufweisen, die miteinander gelenkig verbunden sind. Jedes der beiden Rotationselemente ist mit einem der Stangenelemente drehfest verbunden. Eines der Stangenelemente verbindet vorzugsweise die beiden anderen Stangenelemente, sodass bei einer Drehbewegung (Stellbewegung) des ersten Rotationselements diese auf das zweite Rotationselement übertragen wird. Der Schwenkmechanismus stellt eine (weitere alternative) Möglichkeit dar, die Stellbewegung von der Stelleinheit auf die Riegelelemente zu übertragen.

Bevorzugt ist die Stelleinheit mit wenigstens einem weiteren Riegelelement einer weiteren Riegeleinrichtung zur Übertagung der Stellbewegung direkt verbunden. Mit anderen Worten kann ein weiteres Riegelelement einer weiteren Riegeleinrichtung mit dem ersten Rotationselement zur direkten Aufnahme der Stellbewegung in Eingriff stehen. Das weitere Riegelelement ist vorzugsweise ein Riegelelement der vorstehend beschriebenen Art. Bei dieser Ausführungsform ist an der Stelleinheit, insbesondere dem ersten Rotationselement, eine Riegeleinrichtung angeordnet. Diese Riegeleinrichtung ist nicht über den Übertragungsabschnitt, sondern direkt mit der Stelleinheit verbunden. Die Stelleinheit bildet hier für das weitere Riegelelement die Schiebeeinheit. Dies hat den Vorteil, dass auch an der Position der Stelleinheit bspw. eine Transporteinheit gesichert werden kann. Die Stelleinheit weist dabei eine Doppelfunktion auf.

Weiter bevorzugt ist wenigstens eine Riegelstellung-Überwachungseinrichtung vorgesehen, die die Stellung des Riegelelements in dessen Verschieberichtung überwacht und/oder anzeigt. Besonders bevorzugt ist jede der Riegeleinrichtungen mit einer Riegelstellung-Überwachungseinrichtung ausgestattet, um die Stellung eines jeden Riegelelements zu überwachen bzw. anzuzeigen. Zusätzlich oder alternativ kann die Stelleinheit mit einer Riegelstellung-Überwachungseinrichtung ausgestattet sein, sodass bei der Betätigung der Stelleinheit erkennbar ist, in welcher Stellung sich die Riegelelemente befinden. So kann einfach und schnell kontrolliert werden, ob die Riegelelemente die Transporteinheit(en) ordnungsgemäß fixieren, d.h. sich vollständig in der Fixierstellung befinden, oder eine Störung vorliegt. Ebenfalls kann das ordnungsgemäße Freigeben der Transporteinheit(en) kontrolliert werden.

Die Riegelstellung-Überwachungseinrichtung weist vorzugsweise wenigstens ein Anzeigeelement mit wenigstens einem farbigen Bereich auf, das die Fixierstellung des Riegelelements anzeigt. Bevorzugt ist jede Riegeleinrichtung mit einem solchen Anzeigeelement versehen. Es ist möglich, dass die Riegeleinrichtung und/oder die Schiebeeinheit und/oder die Stelleinheit wenigstens ein farblich markiertes Anzeigeelement aufweisen oder selbst einen farbigen Bereich umfassen, der die Stellung der Riegelelemente anzeigt. Dies hat den Vorteil, dass die Stellung der Riegelelemente bzw. die ordnungsgemäße Verriegelung der Transporteinheit(en) visuell und somit für das Bedienpersonal schnell erkennbar ist.

Bei einer bevorzugten Ausführungsform umfasst die Riegelstellung-Überwachungseinrichtung wenigstens einen magnetischen Schalter. Hierbei schließt der magnetische Schalter in der Fixierstellung des Riegelelements einen Stromkreis und generiert so ein elektrisches Signal. In der Lösestellung ist der magnetische Schalter offen und somit der Stromkreis unterbrochen. Der magnetische Schalter kann ein Reedschalter, insbesondere ein Reedkontakt sein. Bevorzugt weist jede Riegeleinrichtung wenigstens einen magnetischen Schalter zur Riegelstellungsüberwachung auf. Das elektrische Signal kann auf einer Bedienkonsole für das Bedienpersonal angezeigt werden, sodass bspw. erkennbar ist, ob sich das jeweilige Riegelelement in der Fixierstellung befindet.

Bei einer weiteren Ausführungsform umfasst die Riegelstellung-Überwachungseinrichtung wenigstens ein elektrisches Signalmittel, insbesondere eine Leuchte und/oder einen Signaltonerzeuger, das durch ein/das elektrische Signal aktivierbar oder aktiviert ist. Das elektrische Signalmittel kann durch das elektrische Signal aktiviert werden. Dies vereinfacht zusätzlich die Überprüfung der korrekten Fixierung der Transporteinheit(en) durch die Riegelelemente.

Um in einem Störfall das Verbleiben des Riegelelements bzw. der Riegelelemente in seiner Fixierstellung zu realisieren, weist die jeweilige Riegeleinrichtung wenigstens eine Federvorrichtung auf. Die Federvorrichtung hält das Riegelelement im Störfall in seiner Fixierstellung. Ein Störfall kann beispielsweise ein Stromausfall und/oder ein unerwünschtes Betätigen der Stelleinheit und/oder allgemein ein Versagen der Betätigungseinrichtung sein. Generell betrifft der Störfall ein unerwünschtes Verschieben wenigstens eines der Riegelelemente von der Fixierstellung in Richtung der Lösestellung derart, dass die Transporteinheit an dieser Stelle ungesichert ist. Insbesondere im Flugbetrieb ist dies zu vermeiden. Die Federvorrichtung kann zumindest ein Federelement aufweisen. Das Federelement kann eine Schraubenfeder oder eine Tellerfeder sein. Bevorzugt umfasst die Federvorrichtung wenigstens ein Federpaket, das zumindest ein Federelement, bevorzugt mehrere Federelemente, aufweist.

Nach einem nebengeordneten Aspekt betrifft die Erfindung ein Frachtdeck eines Flugzeugs mit wenigstens einem erfindungsgemäßen Riegelsystem, wobei eine Vielzahl von Riegeleinrichtungen entlang zumindest einer in Flugzeuglängsrichtung verlaufenden Schiene voneinander beabstandet angeordnet sind. Jedem Riegelelement ist eine Schiebeeinheit zugeordnet. Die Stelleinheit ist durch den Übertragungsabschnitt mit den Schiebeeinheiten zum Übertragen der Stellbewegung auf die Riegelelemente mechanisch gekoppelt.

Im Einsatz sind also mehrere Riegeleinrichtungen entlang einer Längsseite eines Frachtraums eines Flugzeugs angeordnet. Die Riegeleinrichtungen sind auf einer in Flugzeuglängsrichtung (X-Richtung des Flugzeugs) verlaufenden Schiene, insbesondere Seitenführungsschiene, befestigt. Die Riegelelemente der Riegeleinrichtungen sind vorzugsweise quer zur Flugzeuglängsrichtung (Y-Richtung des Flugzeugs) zwischen der Fixier- und Lösestellung verschiebbar. Der Übertragungsabschnitt erstreckt sich hierbei in Flugzeuglängsrichtung von der Stelleinheit zur Schiebeeinheit, die bei Betätigung der Stelleinheit das Riegelelement in Verschieberichtung, d.h. quer zur Flugzeuglängsrichtung, verschiebt. Jedem Riegelelement ist eine separate Schiebeeinheit zugeordnet, die über den Übertragungsabschnitt mit der Stelleinheit zur Aufnahme einer Stellbewegung verbunden ist.

Nach einem weiteren nebengeordneten Aspekt betrifft die Erfindung ein Flugzeug mit wenigstens einem erfindungsgemäßen Riegelsystem und/oder einem Frachtdeck der vorstehend genannten Art.

Zu den Vorteilen des Frachtdecks sowie des Flugzeugs wird auf die im Zusammenhang mit dem Riegelsystem erläuterten Vorteile verwiesen. Darüber hinaus können das Frachtdeck beziehungsweise das Flugzeug alternativ oder zusätzlich einzelne oder eine Kombination mehrerer zuvor in Bezug auf das Riegelsystem genannte Merkmale aufweisen.

Die Erfindung wird nachstehend mit weiteren Einzelheiten unter Bezug auf die beigefügten Zeichnungen näher erläutert. Die dargestellten Ausführungsformen stellen Beispiele dar, wie das erfindungsgemäße Riegelsystem ausgestaltet sein kann.

In diesen zeigen,
- Fig. 1: eine schematische Darstellung eines Riegelsystems nach einem ersten erfindungsgemäßen Ausführungsbeispiel;
- Fig. 2: eine schematische Darstellung einer mechanischen Kopplung zwischen einer Riegeleinrichtung und einem Übertragungsabschnitt des Riegelsystems gemäß Fig. 1;
- Fig. 3: eine schematische Darstellung eines Riegelsystems nach einem zweiten erfindungsgemäßen Ausführungsbeispiel; und
- Fig. 4: eine schematische Darstellung einer mechanischen Kopplung zwischen einer Riegeleinrichtung und einem Übertragungsabschnitt des Riegelsystems gemäß Fig. 3.

In der nachfolgenden Beschreibung werden für gleiche und gleich wirkende Teile dieselben Bezugsziffern verwendet.

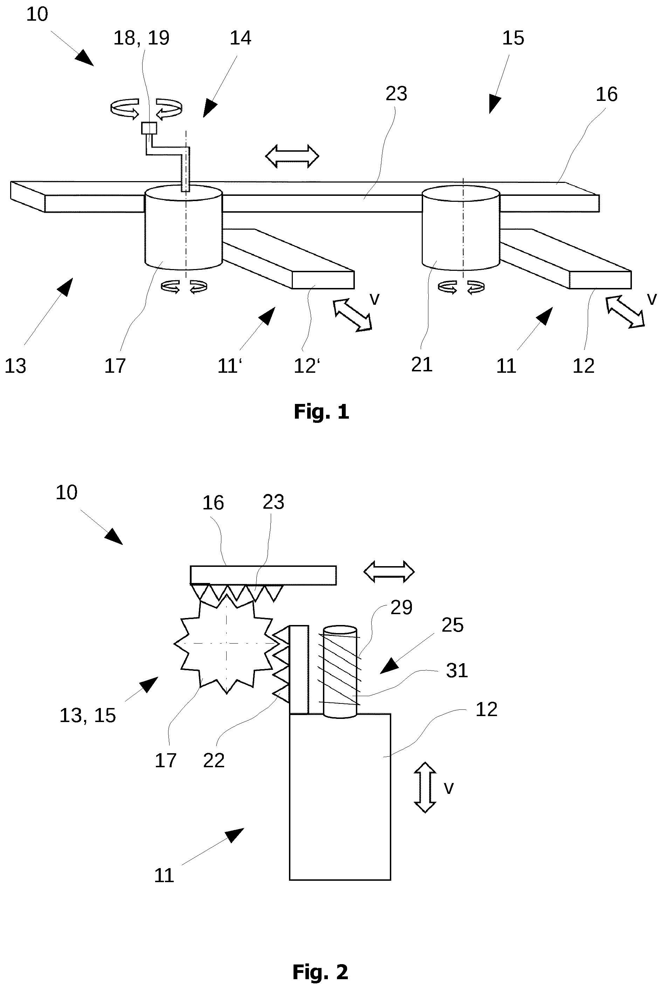

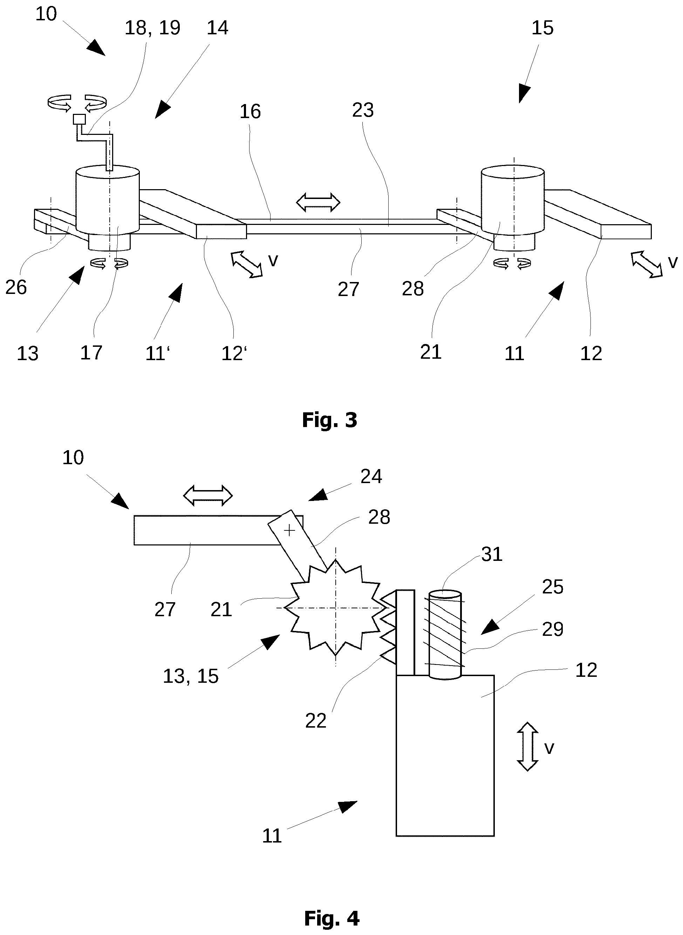

Die Fig. 1 und 3 zeigen eine schematische Darstellung eines Riegelsystems 10 nach jeweils einem erfindungsgemäßen Ausführungsbeispiel. Das Riegelsystem 10 kommt in Frachtdecks von Flugzeugen zum Einsatz.

Üblicherweise verwendet man ein kartesisches Koordinatensystem, um innerhalb eines Flugzeugs einzelne Richtungsangaben bereitzustellen. Hierbei erstreckt sich die X-Achse vom Heck zum Bug, die Y-Achse verläuft quer zur X-Achse und liegt im Wesentlichen in der von den Flügeln aufgespannten Ebene. Die Z-Achse steht senkrecht auf der X- und Y-Achse.

Konkret dient das Riegelsystems 10 zum Befestigen von einer oder mehreren Transporteinheiten. Eine Transporteinheit ist bevorzugt eine Frachtpalette, insbesondere eine Schwerlastpalette. Andere Transporteinheiten sind möglich. Im Folgenden wird die Transporteinheit generell als Frachtpalette bezeichnet.

Das Riegelsystem 10 umfasst mehrere Riegeleinrichtungen 11 mit jeweils wenigstens einem Riegelelement 12, wobei in Fig. 1 sowie Fig. 3 exemplarisch lediglich eine der mehreren Riegeleinrichtungen 11 dargestellt ist. Das Riegelsystem 10 weist ferner eine weitere Riegeleinrichtung 11' mit einem weiteren Riegelelement 12' auf. Die Riegelelemente 12, 12' sind zungenförmig ausgebildet. Konkreter weisen die Riegelelemente 12, 12' eine monolithische, insbesondere blockartige, Form auf. Andere Formen der Riegelelemente 12, 12' sind möglich.

Die Riegelelemente 12, 12' dienen zum Befestigen und Lösen zumindest einer Frachtpalette an einer vorbestimmten Position in einem Frachtdeck. Die Riegelelemente 12, 12' sind in einer Verschieberichtung v zwischen einer Fixierstellung und einer Lösestellung verschiebbar.

In der Fixierstellung fixieren die Riegelelemente 12, 12' die dem jeweiligen Riegelelement gegenüberliegende Frachtpalette an dessen Position. Dabei greifen die Riegelelemente 12, 12' vorzugsweise in Aussparungen, insbesondere Taschen, der Frachtpalette ein und sichern diese in X- und Z-Richtung des Flugzeugs. In der Lösestellung sind die Riegelelemente 12, 12' von der gegenüberliegenden Frachtpalette gelöst. Mit anderen Worten geben die Riegelelemente 12, 12' die Frachtpalette in der Lösestellung frei.

Wie in Fig. 1 und 3 an den eingezeichneten Doppelpfeilen ersichtlich ist, werden die Riegelelemente 12, 12' zum Befestigen und Lösen zwischen der Lösestellung und der Fixierstellung in Verschieberichtung bewegt. Diese Bewegung entspricht einer Translationsbewegung.

Zum Betätigen der Riegeleinrichtungen 11, 11' weist das jeweilige Riegelsystem 10 gemäß Fig. 1 und 3 eine Betätigungseinrichtung 13 auf. Die Betätigungseinrichtung 13 weist eine Stelleinheit 14, für jedes Riegelelement 11 eine separate Schiebeeinheit 15 und einen Übertragungsabschnitt 16 auf. Die Stelleinheit 14 dient zum Einleiten einer Stellbewegung in den Übertragungsabschnitt 16. Der Übertragungsabschnitt 16 dient zur Aufnahme der Stellbewegung der Stelleinheit 14 und zur Übertragung der aufgenommenen Stellbewegung auf die jeweilige Schiebeeinheit 15. Die Schiebeeinheit 15 ist dazu ausgebildet, die Stellbewegung von dem Übertragungsabschnitt 16 aufzunehmen und auf das Riegelelement 12 zu übertragen.

Die Stelleinheit 14 ist somit durch den Übertragungsabschnitt 16 mit den Schiebeeinheiten 15 zur Übertragung einer Stellbewegung für die Riegelelemente 11 verbunden. Der Übertagungsabschnitt 16 erstreckt sich quer zur Verschieberichtung v der Riegelelemente 12, 12'. Durch den Übertragungsabschnitt 16 sind die Stelleinheit 14 und die Schiebeeinheiten 15 miteinander mechanisch gekoppelt. Zusätzlich sind die Schiebeeinheiten 15 mit dem jeweils zugehörigen Riegelelement 12 mechanisch gekoppelt.

Gemäß den Fig. 1 und 3 ist die Stelleinheit 14 von den Riegeleinrichtungen 11 quer zur Verschieberichtung versetzt angeordnet. Mit anderen Worten weist die Stelleinheit 14 von den Riegeleinrichtungen 11 quer zur Verschieberichtung einen Abstand auf. Aufgrund diesen Versatzes sowie der Übertragungseinheit sind die Riegeleinrichtungen 11 über die Stelleinheit 14 fernbetätigbar.

Die Stelleinheit 14 umfasst bei den Ausführungsbeispielen gemäß Fig. 1 sowie Fig. 3 ein Betätigungsmittel 18 und ein durch das Betätigungsmittel 18 drehbares erstes Rotationselement 17. Durch das Betätigungselement 18 ist das erste Rotationselement 17 vorzugsweise zwischen zwei Drehstellungen verstellbar. Diese Drehstellungen entsprechen der Löse- bzw. Fixierstellung der Riegelelemente 12, 12'. Lässt sich das erste Rotationselement 17 beim Fixieren der Frachtpaletten nicht in einer der beiden Drehstellungen vollständig überführen, ist dies ein Indiz dafür, dass zumindest eines der Riegelelemente 12, 12' in eine Aussparung der Paletten nicht ordnungsgemäß eingreift.

Das Betätigungsmittel 18 ist als Kurbel 19 ausgebildet, durch die das erste Rotationselement 17 um seine Rotationsachse gedreht werden kann. Alternativ kann das Betätigungsmittel 18 ein Hebel und/oder ein elektrischer Antrieb sein. In Einbaulage ist die Kurbel 19 an dem ersten Rotationselement 17 oben angeordnet. Die Kurbel 19 ist bevorzugt mit dem ersten Rotationselement 17 lösbar verbunden. Alternativ kann die Kurbel 19 an dem ersten Rotationselement 17 fest, insbesondere stationär, angeordnet sein. Konkreter kann die Kurbel über eine lösbare Steckverbindung an dem ersten Rotationselement angeordnet sein. Die Kurbel 19 kann somit abnehmbar sein.

Die jeweilige Schiebeeinheit 15 weist ein zweites Rotationselement 21 mit einer zentralen Rotationsachse auf. Das zweite Rotationselement 21 ist um dessen Rotationsachse drehbar. Das zweite Rotationselement 21 steht mit dem Riegelelement 12 in Kontakt. Das zweite Rotationselement 21 ist an dem Riegelelement 12 angeordnet.

Das erste und die zweiten Rotationselemente 17, 21 sind jeweils als Zahnrad ausgebildet. Die Rotationsachsen der Rotationselemente 17, 21 sind in Einbaulage in Z-Richtung, d.h. vertikal, ausgerichtet. Mit anderen Worten sind die Rotationselemente 17, 21 derart angeordnet, dass sich die Verzahnung seitlich am Außenumfang befindet. Die Rotationselemente 17, 21 sind somit stehend angeordnet. In den Fig. 2 und 4 ist jeweils ein zweites Rotationselement 21 mit Außenverzahnung gezeigt.

Bei dem Riegelsystem 10 gemäß Fig. 1 ist der Übertragungsabschnitt 16 mit einem verzahnten Bereich 23 ausgebildet. Der Übertragungsabschnitt 16 ist hier eine Zahnstange, wobei der verzahnte Bereich der Zahnstange den Rotationselementen 17, 21 zugewandt ist. Die Zahnräder 17, 21 stehen mit dem verzahnten Bereich 23 der Zahnstange im Eingriff. Die Rotationsbewegung des ersten Rotationselements 17 wird über den verzahnten Bereich 23 in den Übertragungsabschnitt 16 eingeleitet. Dadurch wird der Übertragungsabschnitt 16 bzw. die Zahnstange in eine Translationsbewegung quer zur Verschieberichtung der Riegelelemente 12 versetzt. Durch die mechanische Kopplung der zweiten Rotationselemente 21 wird die Translationsbewegung der Zahnstange in eine Rotationsbewegung der zweiten Rotationselemente 21 umgesetzt. Da die zweiten Rotationselemente 21 mit jeweils einem der Riegelelemente 12 mechanisch verbunden sind, wird die Rotationsbewegung der zweiten Rotationselemente 21 auf die Riegelelemente 12 übertragen.

Im Unterschied zum Riegelsystem 10 gemäß Fig. 1 weist das Riegelsystem 10 gemäß Fig. 3 einen Übertragungsabschnitt 16 mit einem Schwenkmechanismus 24 auf. In Fig. 3 ist konkret ein Schwenkgestänge mit mehreren Stangenelementen 26, 27, 28 gezeigt. Die Stangenelemente 26, 27, 28 sind miteinander gelenkig verbunden. Ein erstes Stangenelement 26 ist mit einem ersten Ende 26' mit dem ersten Rotationselement 17 drehfest verbunden. Das erste Stangenelement 26 erstreckt sich von dem ersten Rotationselement 17 winkelig weg. Mit einem zweiten Ende 26" ist das erste Stangenelement 26 mit einem zweiten Stangenelement 27 gelenkig verbunden. Das zweite Stangenelement 27 erstreckt sich quer zur Verschieberichtung zumindest bis zum dritten Stangenelement 28. Bevorzugt sind mehrere Riegeleinrichtungen 11 (nicht dargestellt) vorgesehen, denen jeweils ein drittes Stangenelement 28 zugeordnet ist. Gleiches gilt für die Schiebeeinheiten 15 bzw. die zweiten Rotationselemente 21, die ebenfalls je Riegeleinrichtung 11 vorgesehen sind.

Das jeweilige dritte Stangenelement 28 ist an einem ersten Ende 28' mit dem zweiten Stangenelement 27 gelenkig verbunden. Mit einem zweiten Ende 28" ist das dritte Stangenelement 28 mit dem zweiten Rotationselement 21 drehfest verbunden, um die Schwenkbewegung des Schwenkgestänges in eine Rotationsbewegung des zweiten Rotationselements 21 umzuwandeln. Diese Verbindung ist bspw. in Fig. 4 zu sehen. Die Schwenkbewegung des Gestänges ergibt sich durch Drehen des ersten Rotationselements 17. Dabei dreht sich das erste Stangenelement 26 um die Rotationsachse des ersten Rotationselements 17 und verschwenkt das zweite Stangenelement 27. Durch die gelenkige Verbindung des dritten Stangenelements 28 mit dem zweiten Stangenelement 27 sowie die drehfeste Verbindung des dritten Stangenelements 28 mit dem zweiten Rotationselement 21 wird das zweite Rotationselement beim Verschwenken um die eigene Rotationsachse gedreht. Da das zweite Rotationselement 21 mit dem Riegelelement 12 mechanisch gekoppelt ist, wird die Rotationsbewegung des zweiten Rotationselements 21 auf das Riegelelement 12 übertragen.

Das jeweilige Riegelelement 12 weist einen Formschlussbereich 22 auf, der durch eine Verzahnung gebildet ist. Die zweiten Rotationselemente 21 stehen mit dem jeweiligen Riegelelement 12 in Zahneingriff. Die Rotationsbewegung des zweiten Rotationselements 21 wird durch diese mechanische Verbindung in eine Translationsbewegung des Riegelelements 12 umgewandelt. Die Stellbewegung des ersten Rotationselements 17 wird somit über die Zahnstange und die zweiten Rotationselemente 21 auf die Riegelelemente 12 übertragen. Das vorstehend beschriebene weitere Riegelelement 12' nimmt hingegen die Rotationsbewegung des ersten Rotationselements 17 direkt auf. Dazu steht das weitere Riegelelement 12' mit dem ersten Rotationselement 17 in direktem Kontakt, insbesondere in Zahneingriff.

Das weitere Riegelelement 12' weist wie das Riegelelement 12 den Formschlussbereich 22 auf. Hinsichtlich der mechanischen Kopplung zwischen dem ersten Rotationselement 17 und dem weiteren Riegelelement 12' zur Übersetzung der Rotationsbewegung in eine Translationsbewegung des weiteren Riegelelements 12' wird auf die vorstehende Beschreibung in Bezug auf die Kopplung zwischen den zweiten Rotationselementen 21 und den Riegelelementen 12 verwiesen.

Die Riegelelemente 12, 12' gemäß Fig. 1 und Fig. 3 umfassen eine Federvorrichtung 25, die wenigstens ein Federelement 29 aufweist. In den Fig. 2 und 4 ist zu sehen, dass das Federelement 29 an einer Rückseite des jeweiligen Riegelelements 12, 12' angeordnet ist. Zum Führen und Halten des Federelements 29 weist die Riegeleinrichtung 11, 11' einen Fortsatz 31 auf, auf den das Federelement 29 aufgeschoben ist. Das Federelement 29 kann eine Schraubenfeder sein. Das Federelement 29 kann durch ein Federpaket gebildet sein. Das Federelement 29 stützt sich bspw. an einem nicht dargestellten Gehäuse oder einem Widerlager ab, um das Riegelelement 12, 12' in Verschieberichtung zur Fixierstellung hin vorzuspannen. Damit wird in einem Störfall verhindert, dass das sich das Riegelelement 12, 12' unzulässigerweise von der zu fixierenden Frachtpalette löst.

Um zu überwachen, ob sich die Riegelelemente 12, 12' zum Fixieren der Frachtpaletten in der Fixierstellung befinden, ist vorzugsweise eine Riegelstellung-Überwachungseinrichtung vorgesehen. Diese kann ein Anzeigeelement mit wenigstens einem farbigen Bereich aufweisen, der die Fixierstellung des Riegelelements 12, 12' anzeigt. Alternativ oder zusätzlich kann die Riegelstellung-Überwachungseinrichtung wenigstens einen magnetischen Schalter umfassen, wobei in der Fixierstellung des Riegelelements 12, 12' der magnetische Schalter einen Stromkreis schließt und ein elektrisches Signal generiert. Die Riegelstellung-Überwachungseinrichtung kann wenigstens ein elektrisches Signalmittel, insbesondere eine Leuchte und/oder einen Signaltonerzeuger, umfassen, das durch das generierte elektrische Signal aktiviert wird.

An dieser Stelle sei darauf hingewiesen, dass alle oben beschriebenen Teile für sich gesehen und in jeder Kombination, insbesondere der in den Zeichnungen dargestellten Details, als erfindungswesentlich beansprucht werden.

### Bezugszeichenliste

- 10: Riegelsystem
- 11: Riegeleinrichtung
- 11': weitere Riegeleinrichtung
- 12: Riegelelement
- 12': weiteres Riegelelement
- 13: Betätigungseinrichtung
- 14: Stelleinheit
- 15: Schiebeeinheit
- 16: Übertragungsabschnitt
- 17: erstes Rotationselement
- 18: Betätigungsmittel
- 19: Kurbel
- 21: zweites Rotationselement
- 22: Formschlussbereich
- 23: verzahnter Bereich
- 24: Schwenkmechanismus
- 25: Federvorrichtung
- 26: erstes Stangenelement
- 26': erstes Ende des ersten Stangenelements
- 26": zweites Ende des ersten Stangenelements
- 27: zweites Stangenelement
- 28: drittes Stangenelement
- 28': erstes Ende des dritten Stangenelements
- 28": zweites Ende des dritten Stangenelements
- 29: Federelement
- 31: Fortsatz
- v: Verschieberichtung

## Patentansprüche

1. Riegelsystem (10) zum Befestigen wenigstens einer Transporteinheit für Frachtstücke, insbesondere einer Frachtpalette, in einem Flugzeug, umfassend:
- mehrere Riegeleinrichtungen (11) mit jeweils wenigstens einem Riegelelement (12) zum Befestigen und Lösen der Transporteinheit an wenigstens einer vorbestimmten Position, wobei das Riegelelement (12) in einer Verschieberichtung (v) zwischen einer Fixierstellung und einer Lösestellung verschiebbar ist; und
- wenigstens eine Betätigungseinrichtung (13) zum Fernbetätigen der Riegeleinrichtungen (11), wobei die Betätigungseinrichtung (13) wenigstens eine Stelleinheit (14) zum Einleiten einer Stellbewegung und wenigstens eine Schiebeeinheit (15) zum Verschieben des Riegelelements (12) aufweist, wobei die Stelleinheit (14) zum Übertragen der Stellbewegung durch wenigstens einen quer zur Verschieberichtung (v) erstreckenden Übertragungsabschnitt (16) der Betätigungseinrichtung (13) mit der Schiebeeinheit (15) verbunden ist, wobei die Schiebeeinheit (15) die vom Übertragungsabschnitt (16) aufgenommene und/oder übersetzte Stellbewegung der Stelleinheit (14) aufnimmt und an das Riegelelement (12) weiterleitet, wobei die Stelleinheit (14) von den Riegeleinrichtungen (11) quer zur Verschieberichtung (v) versetzt angeordnet ist und die Riegeleinrichtungen (11) über die Stelleinheit (14) und den Übertragungsabschnitt (16) fernbetätigbar sind,
wobei die Schiebeeinheit (15) mit dem Riegelelement (12) der jeweiligen Riegeleinrichtung (11) mechanisch gekoppelt ist, um die Stellbewegung zu übertragen und das Riegelelement (12) in Verschieberichtung (v) zwischen der Fixier- und Lösestellung zu bewegen, wobei das Riegelelement (12) einen Formschlussbereich (22) aufweist, der durch eine Verzahnung gebildet ist und die Schiebeeinheit (15) ein, insbesondere zweites, Rotationselement (21) umfasst, das mit dem Riegelelement (12) zum Überführen in die Fixierstellung und/oder in die Lösestellung in Zahneingriff steht.

2. Riegelsystem (10) nach Anspruch 1,
**dadurch gekennzeichnet, dass**
die Stelleinheit (14) zum Fernbetätigen von der Riegeleinrichtung (11) quer zur Verschieberichtung (v) des wenigstens einen Riegelelements (12) beabstandet ist.

3. Riegelsystem (10) nach Anspruch 1 oder 2,
**dadurch gekennzeichnet, dass**
die Stelleinheit (14) wenigstens ein erstes Rotationselement (17), insbesondere ein erstes Zahnrad, und wenigstens ein Betätigungsmittel (18) umfasst, durch das das erste Rotationselement (17) zum Einleiten einer Stellbewegung um seine Rotationachse drehbar ist.

4. Riegelsystem (10) nach Anspruch 3,
**dadurch gekennzeichnet, dass**
das Betätigungsmittel (18) einen Hebel und/oder eine Kurbel (19) und/oder einen elektrischen Stellantrieb umfasst.

5. Riegelsystem (10) nach einem der vorhergehenden Ansprüche, insbesondere nach einem der Ansprüche 3 oder 4,
**dadurch gekennzeichnet, dass**
der Übertragungsabschnitt (16) eine längliche Erstreckung aufweist und wenigstens einen verzahnten Bereich (23), insbesondere eine Zahnstange, und/oder wenigstens einen Gewindebereich, insbesondere eine Gewindespindel, umfasst, der mit wenigstens einem der Rotationselemente (17, 21) zum Einleiten und/oder Übertragen der Stellbewegung in Eingriff steht.

6. Riegelsystem (10) nach einem der vorhergehenden Ansprüche, insbesondere nach einem der Ansprüche 3 bis 5,
**dadurch gekennzeichnet, dass**
der Übertragungsabschnitt (16) wenigstens einen Schwenkmechanismus (24), insbesondere ein Schwenkgestänge, umfasst, der das erste Rotationselement (17) und das zweite Rotationselement (21) derart gelenkig verbindet, dass bei Rotation des ersten Rotationselements (17) der Schwenkmechanismus (24) eine Schwenkbewegung ausführt und das zweite Rotationselement (21) in Rotation versetzt.

7. Riegelsystem (10) nach einem der vorhergehenden Ansprüche,
**dadurch gekennzeichnet, dass**
die Stelleinheit (14) mit wenigstens einem weiteren Riegelelement (12') einer weiteren Riegeleinrichtung (11') zur Übertagung der Stellbewegung direkt verbunden ist.

8. Riegelsystem (10) nach einem der vorhergehenden Ansprüche,
**dadurch gekennzeichnet, dass**
wenigstens eine Riegelstellung-Überwachungseinrichtung vorgesehen ist, die die Stellung des Riegelelements (12, 12') in dessen Verschieberichtung (v) überwacht und/oder anzeigt.

9. Riegelsystem (10) nach einem der vorhergehenden Ansprüche, insbesondere nach Anspruch 8,
**dadurch gekennzeichnet, dass**
die Riegelstellung-Überwachungseinrichtung wenigstens ein Anzeigeelement mit wenigstens einem farbigen Bereich aufweist, das die Fixierstellung des Riegelelements (12, 12') anzeigt und/oder die Riegelstellung-Überwachungseinrichtung wenigstens einen magnetischen Schalter umfasst, wobei in der Fixierstellung des Riegelelements (12) der magnetische Schalter einen Stromkreis schließt und ein elektrisches Signal generiert.

10. Riegelsystem (10) nach einem der Ansprüche 8 oder 9,
**dadurch gekennzeichnet, dass**
die Riegelstellung-Überwachungseinrichtung wenigstens ein elektrisches Signalmittel, insbesondere eine Leuchte und/oder einen Signaltonerzeuger, umfasst, das durch ein/das elektrische Signal aktivierbar oder aktiviert ist.

11. Riegelsystem (10) nach einem der vorhergehenden Ansprüche,
**dadurch gekennzeichnet, dass**
die Riegeleinrichtung (11) wenigstens eine Federvorrichtung (25) aufweist, die das Riegelelement (12) bei einem Störfall in der Fixierstellung fixiert.

12. Frachtdeck eines Flugzeugs mit wenigstens einem Riegelsystem (10) nach einem der vorhergehenden Ansprüche, wobei eine Vielzahl von Riegeleinrichtungen (11) entlang zumindest einer in Flugzeuglängsrichtung verlaufenden Schiene voneinander beabstandet angeordnet sind, wobei jedem Riegelelement (12) eine Schiebeeinheit (15) zugeordnet ist und die Stelleinheit (14) durch den Übertragungsabschnitt (16) mit den Schiebeeinheiten (15) zum Übertragen der Stellbewegung auf die Riegelelemente (12) mechanisch gekoppelt ist.

13. Flugzeug mit wenigstens einem Riegelsystem (10) nach einem der Ansprüche 1 bis 11 und/oder wenigstens einem Frachtdeck nach Anspruch 12.

## Claims

1. Locking system (10) for securing at least one transport unit for cargo items, in particular a cargo pallet, in an aircraft, comprising:
- a plurality of locking devices (11), each having at least one locking element (12) for securing and releasing the transport unit at least one predetermined position, wherein the locking element (12) is displaceable in a displacement direction (v) between a fixed position and a release position; and
- at least one actuating device (13) for remotely actuating the locking devices (11), wherein the actuating device (13) has at least one positioning unit (14) for initiating a positioning movement and at least one sliding unit (15) for displacing the locking element (12), wherein the positioning unit (14) is connected to the sliding unit (15) for transmitting the positioning movement by means of at least one transmission section (16) of the actuating device (13) extending transversely to the displacement direction (v), wherein the sliding unit (15) receives the positioning movement of the positioning unit (14) received and/or transmitted by the transmission section (16) and transmits it to the locking element (12), wherein the positioning unit (14) is arranged offset by the locking devices (11) transversely to the direction of displacement (v) and the locking devices (11) can be remotely actuated via the positioning unit (14) and the transmission section (16),
wherein the sliding unit (15) is mechanically coupled to the locking element (12) of the respective locking device (11) in order to transmit the positioning movement and move the locking element (12) in the direction of displacement (v) between the fixing and release positions, wherein the locking element (12) has a form-fitting area (22) which is formed by a toothing, and the sliding unit (15) comprises a, in particular second, rotary element (21) which is in meshing engagement with the locking element (12) for transfer into the fixing position and/or into the release position.

2. Locking system (10) according to claim 1,
**characterized in that**
the positioning unit (14) for remote actuation is spaced apart from the locking device (11) transversely to the direction of displacement (v) of the at least one locking element (12).

3. Locking system (10) according to claim 1 or 2,
**characterized in that**
the positioning unit (14) comprises at least one first rotary element (17), in particular a first gearwheel, and at least one actuating means (18), by means of which the first rotary element (17) can be rotated about its axis of rotation in order to initiate a positioning movement.

4. Locking system (10) according to claim 3,
**characterized in that**
the actuating means (18) comprises a lever and/or a crank (19) and/or an electric actuator.

5. Locking system (10) according to one of the preceding claims,
in particular according to one of claims 3 or 4,
**characterized in that**
the transmission section (16) has an elongated extension and comprises at least one toothed area (23), in particular a rack, and/or at least one threaded area, in particular a threaded spindle, which engages with at least one of the rotary elements (17, 21) for initiating and/or transmitting the positioning movement.

6. Locking system (10) according to one of the preceding claims,
in particular according to one of claims 3 to 5,
**characterized in that**
the transmission section (16) comprises at least one swivel mechanism (24), in particular a swivel linkage, which connects the first rotary element (17) and the second rotary element (21) in an articulated manner such that, when the first rotary element (17) rotates, the swivel mechanism (24) performs a swiveling movement and causes the second rotary element (21) to rotate.

7. Locking system (10) according to one of the preceding claims,
**characterized in that**
the positioning unit (14) is directly connected to at least one further locking element (12') of a further locking device (11') for transmitting the positioning movement.

8. Locking system (10) according to one of the preceding claims,
**characterized in that**
at least one locking position monitoring device is provided which monitors and/or indicates the position of the locking element (12, 12') in its direction of displacement (v).

9. Locking system (10) according to one of the preceding claims,
in particular according to claim 8,
**characterized in that**
the locking position monitoring device has at least one display element with at least one colored area which indicates the fixed position of the locking element (12, 12') and/or the locking position monitoring device comprises at least one magnetic switch, wherein, in the fixed position of the locking element (12), the magnetic switch closes an electrical circuit and generates an electrical signal.

10. Locking system (10) according to one of claims 8 or 9,
**characterized in that**
the locking position monitoring device comprises at least one electrical signal means, in particular a light and/or a signal tone generator, which can be activated or is activated by the electrical signal.

11. Locking system (10) according to one of the preceding claims,
**characterized in that**
the locking device (11) has at least one spring device (25) which fixes the locking element (12) in the fixed position in the event of a malfunction.

12. Cargo deck of an aircraft having at least one locking system (10) according to one of the preceding claims, wherein a plurality of locking devices (11) are arranged at a distance from one another along at least one rail extending in the longitudinal direction of the aircraft, wherein each locking element (12) is assigned a sliding unit (15) and the positioning unit (14) is mechanically coupled to the sliding units (15) by the transmission section (16) for transmitting the positioning movement to the locking elements (12).

13. Aircraft having at least one locking system (10) according to one of claims 1 to 11 and/or at least one cargo deck according to claim 12.

## Revendications

1. Système de targette (10) pour fixer au moins une unité de transport pour des éléments de cargaison, en particulier une palette de cargaison, dans un avion, comprenant :
- plusieurs dispositifs de targette (11) comprenant chacun au moins un élément de targette (12) pour fixer et libérer l'unité de transport dans au moins une position prédéterminée, l'élément de targette (12) pouvant être déplacé dans un sens de translation (v) entre la position d'immobilisation et une position de libération ; et
- au moins un dispositif d'actionnement (13) pour l'actionnement à distance des dispositifs de targette (11), lequel dispositif d'actionnement (13) comprend au moins une unité de déplacement (14) pour initier un mouvement de déplacement et au moins une unité de translation (15) pour la translation de l'élément de targette (12), l'unité de déplacement (14) étant reliée à l'unité de translation (15), afin de transmettre le mouvement de déplacement, par au moins une section de transmission (16) du dispositif d'actionnement (13) qui s'étend perpendiculairement au sens de translation (v), l'unité de translation (15) recevant le mouvement de déplacement de l'unité de déplacement (14) reçu et/ou multiplié par la section de transmission (16) et le transmettant à l'élément de targette (12), l'unité de déplacement (14) étant décalée par rapport aux dispositifs de targette (11) perpendiculairement au sens de translation (v) et les dispositifs de targette (11) pouvant être actionnés à distance par l'unité de déplacement (14) et la section de transmission (16), l'unité de translation (15) étant couplée mécaniquement à l'élément de targette (12) de chaque dispositif de targette (11) afin de transmettre le mouvement de déplacement et de déplacer l'élément de targette (12) dans le sens de translation (v) entre la position d'immobilisation et la position de libération, l'élément de targette (12) comportant une zone d'engagement positif (22) qui est formé par une denture et l'unité de translation (15) comprenant un élément rotatif, de préférence un deuxième élément rotatif (21), qui est en prise avec l'élément de targette (12) pour le passage dans la position d'immobilisation et/ou dans la position de libération.

2. Système de targette (10) selon la revendication 1, **caractérisé en ce que** l'unité de déplacement (14) pour l'actionnement à distance du dispositif de targette (11) est écartée de l'au moins un élément de targette (12) perpendiculairement au sens de translation (v).

3. Système de targette (10) selon la revendication 1 ou 2, **caractérisé en ce que** l'unité de déplacement (14) comprend au moins un premier élément rotatif (17), en particulier une première roue dentée, et au moins un moyen d'actionnement (18) par lequel le premier élément rotatif (17) peut être entraîné en rotation autour de son axe de rotation pour initier un mouvement de déplacement.

4. Système de targette (10) selon la revendication 3, **caractérisé en ce que** le moyen d'actionnement (18) comprend un levier et/ou une manivelle (19) et/ou un entraînement de déplacement électrique.

5. Système de targette (10) selon l'une des revendications précédentes, en particulier selon l'une des revendications 3 ou 4, **caractérisé en ce que** la section de transmission (16) comporte une extension allongée et au moins une zone dentée (23), en particulier une crémaillère, et/ou au moins une zone filetée, en particulier une tige filetée, qui est en prise avec au moins un des éléments rotatifs (17, 21) pour initier et/ou transmettre le mouvement de déplacement.

6. Système de targette (10) selon l'une des revendications précédentes, en particulier selon l'une des revendications 3 à 5, **caractérisé en ce que** la section de transmission (16) comprend au moins un mécanisme pivotant (24), en particulier une tringle pivotante, qui relie de façon articulée le premier élément rotatif (17) et le deuxième élément rotatif (21) de telle manière que, lors de la rotation du premier élément rotatif (17), le mécanisme pivotant (24) exécute un mouvement pivotant et le deuxième élément rotatif (21) est mis en rotation.

7. Système de targette (10) selon l'une des revendications précédentes, **caractérisé en ce que** l'unité de déplacement (14) est reliée directement à au moins un autre élément de targette (12') d'un autre dispositif de targette (11') pour transmettre le mouvement de déplacement.

8. Système de targette (10) selon l'une des revendications précédentes, **caractérisé en ce qu'**est prévu au moins un dispositif de surveillance de la position de la targette qui surveille et/ou indique la position de l'élément de targette (12, 12') dans le sens de translation (v) de celui-ci.

9. Système de targette (10) selon l'une des revendications précédentes, en particulier selon la revendication 8, **caractérisé en ce que** le dispositif de surveillance de la position de la targette comporte au moins un élément indicateur avec au moins une plage colorée qui indique la position d'immobilisation de l'élément de targette (12, 12') et/ou le dispositif de surveillance de la position de la targette comprend au moins un commutateur magnétique, lequel commutateur magnétique ferme un circuit électrique et génère un signal électrique dans la position d'immobilisation de l'élément de targette (12).

10. Système de targette (10) selon l'une des revendications 8 ou 9, **caractérisé en ce que** le dispositif de surveillance de la position de la targette comprend au moins un moyen de signalisation électrique, en particulier un voyant lumineux et/ou un générateur de signal sonore, qui peut être activé ou désactivé par un/le signal électrique.

11. Système de targette (10) selon l'une des revendications précédentes, **caractérisé en ce que** le dispositif de targette (11) comporte au moins un mécanisme de ressort (25) qui immobilise l'élément de targette (12) dans la position d'immobilisation en cas d'incident.

12. Soute de chargement d'un avion, munie d'au moins un système de targette (10) selon l'une des revendications précédentes, dans laquelle plusieurs dispositifs de targette (11) sont disposés à distance les uns des autres le long d'au moins un rail qui s'étend dans le sens de la longueur de l'avion, chaque élément de targette (12) étant associé à une unité de translation (15) et l'unité de déplacement (14) étant couplée mécaniquement par la section de transmission (16) avec les unités de translation (15) pour transmettre le mouvement de déplacement aux éléments de targette (12).

13. Avion muni d'au moins un système de targette (10) selon l'une des revendications 1 à 11 et/ou d'au moins une soute de chargement selon la revendication 12.
